# FASCICULE DE BREVET EUROPEEN

(11) **EP 1 757 666 B1**
(45) Date de publication et mention de la délivrance du brevet: **18.06.2014**
(21) Numéro de dépôt: 06300894.0
(22) Date de dépôt: 24.08.2006
(51) Int. Cl.: C09J 5/00

(54) **Procédé de solidarisation de deux pièces en matière thermoplastique au moyen d'une matière liante**
Verfahren zum verfestigen von zwei thermoelastischen Teilen mittels eines Klebers
Method for solidification of two thermoplastic parts by means of an adhesive

(30) Priorité: 26.08.2005 FR 0508790
(43) Date de publication de la demande: 28.02.2007
(73) Titulaire: COMPAGNIE PLASTIC OMNIUM, 69007 Lyon (FR)
(72) Inventeur: Virelizier, François, 38080 Saint Marcel Bel Accueil (FR)
(74) Mandataire: Remy, Vincent Noel Paul

(56) Documents cités:
- US-A1- 2004 201 138

## Description

La présente invention concerne un procédé de solidarisation de deux pièces en matière thermoplastique au moyen d'une matière liante.

Les pièces de véhicule automobile sont de plus en plus fabriquées en matière thermoplastique. Par exemple, des pièces de carrosserie ou des pièces d'aspect sont couramment fabriquées en matière thermoplastique.

Grâce à l'utilisation de matière thermoplastique, on peut fabriquer des pièces très fines qui se présentent sous la forme d'une peau. On connaît par exemple une peau de pare-chocs réalisée en matière thermoplastique.

Du fait de sa finesse, une telle peau est à la fois légère et souple. La légèreté de la peau procure un grand nombre d'avantages. En revanche, la souplesse de la peau peut être un inconvénient lorsque la peau est positionnée sur le véhicule automobile de telle façon qu'elle subit localement des contraintes.

Il est donc parfois nécessaire de rigidifier la peau localement. Cette rigidification est obtenue au moyen d'un renfort en matière thermoplastique positionné derrière la peau.

Dans l'état de la technique, la solidarisation du renfort à la peau peut être obtenue par soudure ultrason ou au moyen d'une matière liante, par exemple de la colle. Le procédé de solidarisation au moyen de matière liante consiste à encoller au moins une des deux pièces puis à mettre en contact les deux pièces afin de les solidariser. Cette dernière étape est généralement connue sous le nom d'affichage ou d'accostage.

Pour solidariser les deux pièces, on utilise une colle qui se solidifie en refroidissant ou en réticulant. A compter du moment où la colle a été appliquée sur les pièces à solidariser, on ne dispose donc que d'une durée limitée pour mettre en oeuvre l'étape d'affichage. Cette durée d'attente limite s'avère particulièrement contraignante.

L'invention a donc pour but de fournir un procédé de solidarisation de deux pièces en matière thermoplastique au moyen d'une matière liante grâce auquel on s'affranchit de toute contrainte temporelle lors de la mise en oeuvre des étapes de ce procédé.

A cet effet, l'invention a pour objet un procédé de solidarisation de deux pièces en matière thermoplastique au moyen d'une matière liante, caractérisé en ce qu'il comprend les étapes successives suivantes :
- mise en contact des pièces selon une surface de contact délimitée par une frontière,
- dépôt de matière liante sur les pièces, à l'extérieur de la frontière et le long d'au moins une partie de la frontière, de sorte que la matière liante est au contact des deux pièces,
- solidarisation au moyen de la matière liante des deux pièces (10, 12) l'une à l'autre.

La frontière définit deux domaines distincts : un domaine situé à l'intérieur de la frontière et qui est confondu avec la surface de contact et un domaine complémentaire situé à l'extérieur de la frontière.

Grâce à l'invention, il n'y a plus d'étape préalable d'enduction de la matière liante sur les pièces à solidariser. La matière liante est déposée sur les pièces après que celles-ci ont été mises en contact l'une avec l'autre. Ce procédé de solidarisation ne comprend donc aucune étape postérieure au dépôt de la matière liante, à accomplir dans un temps limité.

Comme la matière liante est déposée sur les pièces après mise en contact, la matière liante reste visible et accessible une fois les pièces solidarisées. Cela permet en particulier d'agir directement sur la matière liante pour accélérer son refroidissement ou sa réticulation. Par exemple, on peut chauffer la matière liante sans avoir besoin de chauffer les pièces ce qui est impossible avec les procédés de l'état de la technique.

Le procédé de l'invention permet également un gain de temps lors de la mise en oeuvre d'une étape supplémentaire de traitement, notamment par flamage, des surfaces sur lesquelles la matière liante est déposée. En effet, avec le procédé de l'état de la technique, il faut traiter successivement chaque surface sur laquelle la matière liante est déposé. Grâce au procédé de l'invention, l'étape de traitement de surface est mise en oeuvre juste après l'étape de mise en contact des deux pièces. Ainsi, en une seule opération, on peut traiter les deux pièces à solidariser.

Un procédé de solidarisation selon l'invention peut en outre comporter l'une ou plusieurs des caractéristiques suivantes.
- Une première pièce comprenant au moins un orifice débouchant respectivement sur des première et seconde surfaces de la première pièce, on met en contact la première surface de la première pièce avec une seconde pièce selon la surface de contact, puis on dépose de la matière liante dans l'orifice.
- L'orifice est une perforation ou une rainure.
- L'une des pièces comprend un réseau d'orifices, par exemple le renfort. Alors, on peut déposer de la matière liante dans chaque orifice du réseau. On constate en effet de manière surprenante, que la fixation obtenue en déposant un point de colle dans chaque orifice d'un réseau est particulièrement résistante. Or, ce procédé de fixation s'avère particulièrement simple à mettre en oeuvre et il présente en outre un avantage esthétique indéniable. En effet, la matière liante utilisée reste confinée dans les orifices et ne déborde pas du renfort de manière inesthétique comme c'est parfois le cas lorsque l'on utilise un procédé de collage classique.
- La matière liante est de la colle.
- La colle est une polyoléfine.
- La colle est du polypropylène fondu. Il est notamment possible de déposer la polypropylène sur les pièces au moyen d'une seringue. Il est particulièrement intéressant de choisir comme colle un matériau thermoplastique compatible avec la matière thermoplastique utilisée pour la fabrication des pièces à solidariser.
- On dépose de la matière liante dans l'orifice de sorte que la matière liante remplit l'orifice et déborde sur la seconde surface. Cela permet d'augmenter les surfaces de collage et donc la résistance de la fixation des deux pièces. Le fait que la matière liante déborde sur la seconde surface permet d'augmenter la résistance à l'arrachement.
- L'orifice débouche sur la première surface selon un premier contour et sur la seconde surface selon un second contour, le premier contour définissant une surface d'aire supérieure à celle de la surface définie par le second contour. Ainsi, on augmente la surface des pièces en contact avec la matière liante ce qui accroît la résistance de la fixation.
- La seconde pièce comprend une saillie destinée à coopérer avec l'orifice de la première pièce, et dans lequel on remplit l'orifice de matière liante.
- La profondeur de l'orifice est supérieure à l'épaisseur moyenne de la première pièce.
- Une des pièces est une pièce de carrosserie de véhicule automobile et l'autre pièce est l'une quelconque des pièces de l'ensemble constitué par un renfort, un support de pièce, un support de capteur, une grille, notamment une grille de calandre, une bandeau, un bourrelet, un jonc et une pièce décorative

L'invention sera mieux comprise à la lecture de la description qui va suivre, donnée uniquement à titre d'exemple et faite en se référant aux dessins annexés dans lesquels :
- la figure 1 est une vue en perspective de deux pièces solidarisées par mise en oeuvre d'un procédé selon l'invention ;
- la figure 2 est un schéma selon une coupe verticale des deux pièces représentées sur la figure 1 ;
- la figure 3 est une vue du dessus d'une des pièces représentée sur les figures 1 et 2 sur laquelle est schématisée la surface de contact avec l'autre pièce ;
- les figures 4 à 7 sont des schémas selon une coupe verticale de deux pièces solidarisées selon différentes variantes de l'invention ;

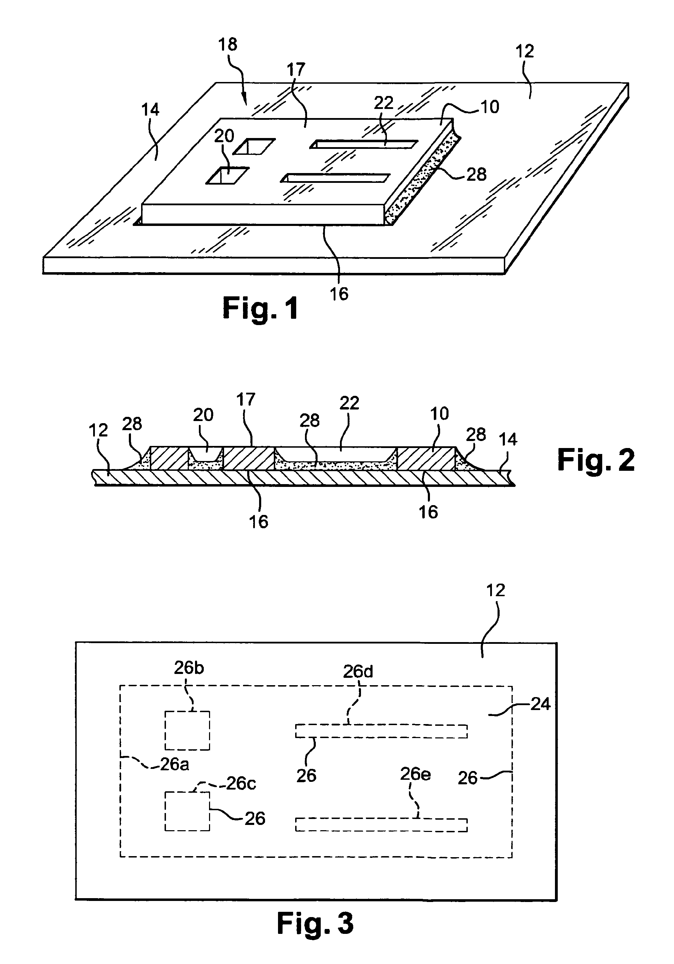

La figure 1 représente des première 10 et seconde 12 pièces solidarisées par mise en oeuvre d'un procédé de solidarisation selon l'invention.

La première pièce 10 est un renfort de la seconde pièce 12, réalisé en matière thermoplastique et d'épaisseur de l'ordre de 2 millimètres. La seconde pièce 12 est une pièce de carrosserie de véhicule automobile, réalisée en matière thermoplastique et d'épaisseur de l'ordre de 3 millimètres. Cette pièce est une peau d'aspect 12.

La peau 12 comprend une face 14 sur laquelle le renfort 10 est solidarisé. Le renfort 10 comprend des première 16 et seconde 17 surfaces, la première surface 16 étant en contact avec la face 14 de la peau 12.

Le renfort 10 comprend des orifices traversants 18 débouchant respectivement sur les première 16 et seconde 17 surfaces du renfort 10. Deux types d'orifices 18 sont représentés sur la figure 1. D'une part, des perforations 20, et d'autre part, des rainures 22.

La face 14 de la peau 12 et la première surface 16 du renfort 10 sont en contact selon une surface de contact 24 délimitée par une frontière 26 représentée en traits discontinus sur la figure 3. Du fait des orifices 18, cette frontière 26 est composée de plusieurs courbes fermées 26a, 26b, 26c, 26d, 26e. La courbe 26a correspond au contour général du renfort 10. Les courbes 26b et 26c correspondent aux contours des perforations 20. Les courbes 26d et 26e correspondent aux contours des rainures 22.

La surface de contact 24 est confondue avec l'intérieur de la frontière 26.

La solidarisation des deux pièces 10 et 12 est obtenue au moyen d'une matière liante 28 déposée sur les pièces, à l'extérieur de la frontière 26 et le long de la frontière 26 de sorte que la matière liante 28 est au contact des deux pièces 10 et 12.

Comme représenté sur la figure 2, qui est une vue selon une coupe verticale de l'ensemble des deux pièces 10 et 12, la matière liante 28 a été déposée dans les orifices 20 et 22 ainsi que sur les bords de la pièce de renfort 10.

On utilise comme matière liante de préférence une polyoléfine comme du polypropylène fondu qui peut être déposé sur les deux pièces par exemple au moyen d'une seringue.

Ainsi, le procédé de solidarisation des deux pièces 10 et 12 consiste tout simplement à mettre en contact les pièces selon la surface de contact 24 puis à déposer de la matière liante 28 le long de la frontière 26, c'est-à-dire au bord de la pièce de renfort 10 ou dans les orifices 18. Il est clair que, contrairement à l'état de la technique, le dépôt de matière liante 28 est la dernière étape du procédé de solidarisation des deux pièces. Le temps de réticulation ou de refroidissement de la matière liante n'est donc pas une contrainte.

De plus, grâce à l'invention, il n'est pas nécessaire de déposer de matière liante sur la surface de contact 24. Ainsi, on ne crée pas de surépaisseur qui, dans l'état de la technique, nuit au positionnement précis des pièces l'une par rapport à l'autre.

On notera enfin que l'invention n'est pas limitée aux modes de réalisation précédemment décrits.

En effet, ce procédé s'applique à des pièces de toutes formes et de tous types, notamment à un support, une grille, une pièce décorative ou un bandeau. De plus, la présence d'orifices dans la pièce de renfort est optionnelle et la forme de ces orifices peut être quelconque. Il est en effet possible de coller une plaque de renfort convexe sur une pièce à renforcer simplement en déposant de la matière liante tout autour de la pièce de renfort et en prenant soin que la matière liante soit au contact des deux pièces.

Selon une variante (non-représentée) particulièrement avantageuse, le renfort comprend un réseau de perforations, les perforations étant par exemple régulièrement réparties à la surface du renfort sous la forme d'un quadrillage.

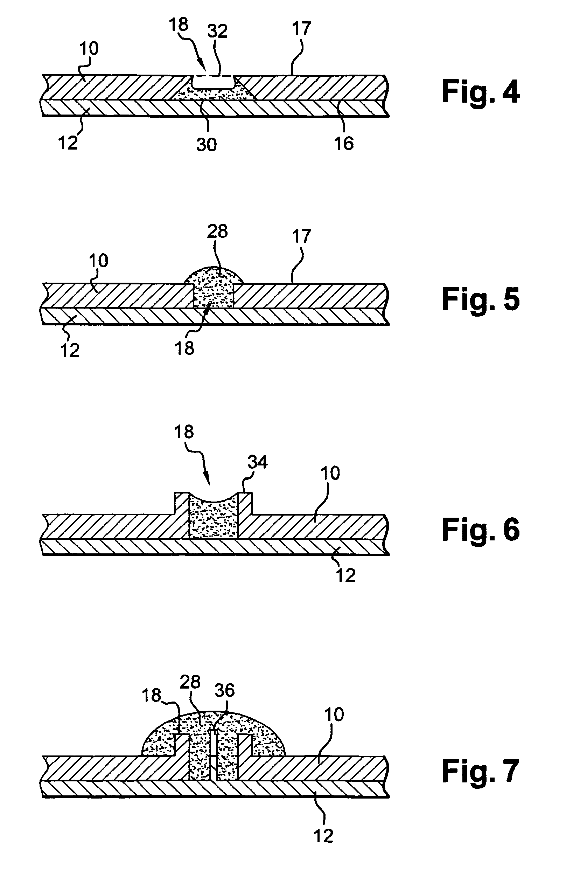

Selon une variante représentée sur la figure 4, l'orifice 18 débouche sur la première surface 16 selon un premier contour 30 et sur la seconde surface 17 selon un second contour 32, le premier contour 30 définissant une surface d'aire supérieure à celle de la surface définie par le second contour 32. Ainsi, la partie visible de l'orifice 18, c'est-à-dire le second contour 32, a des petites dimensions mais la surface de collage entre les deux pièces est importante ce qui assure un bon compromis entre l'esthétique et la robustesse de la fixation.

Selon une autre variante représentée sur la figure 5, de la matière liante 28 a été déposée dans l'orifice 18 de sorte que la matière liante 28 remplit l'orifice et déborde sur la seconde surface 17. Ainsi, en se solidifiant, la matière liante 28 retient les deux pièces l'une contre l'autre en évitant leur arrachement. En d'autres termes, la matière liante joue sensiblement le même rôle qu'une tête de vis.

Selon une autre variante représentée sur la figure 6, les bords 34 de la première pièce 10 qui délimitent l'orifice 18 ont une épaisseur supérieure à l'épaisseur moyenne de la première pièce. En d'autres termes, la profondeur de l'orifice est supérieure à l'épaisseur moyenne de la première pièce 10. Ainsi, la matière liante est en contact avec les pièces selon une plus grande surface.

La pièce de renfort peut également avoir des bords d'épaisseur supérieure à l'épaisseur moyenne de la pièce.

Selon une dernière variante représentée sur la figure 7, la seconde pièce 12 comprend une saillie 36, d'une épaisseur d'environ 0,9 millimètres, destinée à coopérer avec l'orifice 18 de la première pièce 10. L'orifice est rempli de matière liante 28. Ce mode de réalisation permet également d'augmenter la solidité de la fixation en augmentant les surfaces en contact avec la matière liante. La hauteur de la saillie peut être quelconque et la saillie peut être par exemple un directeur d'énergie.

## Revendications

1. Procédé de solidarisation de deux pièces en matière thermoplastique (10, 12) au moyen d'une matière liante (28), **caractérisé en ce qu'**il comprend les étapes successives suivantes :
- mise en contact des pièces (10, 12) selon une surface de contact (24) délimitée par une frontière (26),
- dépôt de matière liante (28) sur les pièces, à l'extérieur de la frontière et le long d'au moins une partie de la frontière, de sorte que la matière liante est au contact des deux pièces,
- solidarisation au moyen de la matière liante des deux pièces (10, 12) l'une à l'autre.

2. Procédé selon la revendication 1, dans' lequel, une première pièce (10) comprenant au moins un orifice (18, 20, 22) débouchant respectivement sur des première (16) et seconde (17) surfaces de la première pièce (10), on met en contact la première surface (16) de la première pièce avec une seconde pièce (12) selon la surface de contact (24), puis on dépose de la matière liante (28) dans l'orifice (18, 20, 22).

3. Procédé selon la revendication 2, dans laquelle l'orifice (18) est une perforation (20) ou une rainure (22).

4. Procédé selon la revendication 2 ou 3, dans lequel l'une des pièces comprend un réseau d'orifices.

5. Procédé selon la revendication 4, dans lequel de la matière liante est déposée dans chaque orifice du réseau.

6. Procédé selon l'une quelconque des revendications précédentes, dans lequel la matière liante (28) est de la colle.

7. Procédé selon la revendication 6, dans lequel la colle est une polyoléfine.

8. Procédé selon la revendication 7, dans lequel la colle est du polypropylène fondu.

9. Procédé selon l'une quelconque des revendications 2 à 8, dans lequel on dépose de la matière liante dans l'orifice de sorte que la matière liante remplit l'orifice et déborde sur la seconde surface.

10. Procédé selon l'une quelconque des revendications 2 à 9, dans lequel l'orifice débouche sur la première surface (16) selon un premier contour (30) et sur la seconde surface (17) selon un second contour (32), le premier contour (30) définissant une surface d'aire supérieure à cette de la surface définie par le second contour (32).

11. Procédé selon l'une quelconque des revendications 2 à 10, dans lequel la seconde pièce (12) comprend une saillie (36) destinée à coopérer avec l'orifice (18) de la première pièce, et dans lequel on remplit l'orifice de matière liante.

12. Procédé selon l'une quelconque des revendications 2 à 11, dans lequel la profondeur de l'orifice est supérieure à l'épaisseur moyenne de la première pièce.

13. Procédé selon l'une quelconque des revendications précédentes, dans lequel une (12) des pièces est une pièce de carrosserie de véhicule automobile et l'autre pièce (10) est l'une quelconque des pièces de l'ensemble constitué par un renfort, un support de pièce, un support de capteur, une grille, notamment une grille de calandre, un bandeau et une pièce décorative.

## Patentansprüche

1. Verfahren zum Verfestigen von zwei Teilen aus thermoplastischem Material (10, 12) mit Hilfe eines Bindemittels (28), **dadurch gekennzeichnet, dass** es die die folgenden aufeinander folgenden Schritte umfasst:
- Herstellen eines Kontakts zwischen den Teilen (10, 12) gemäß einer Kontaktfläche (24), die durch eine Grenze (26) begrenzt ist,
- Aufbringen eines Bindemittels (28) auf die Teile außerhalb der Grenze und entlang mindestens eines Teils der Grenze, so dass das Bindemittel mit den beiden Teilen in Kontakt ist,
- Verfestigen der beiden Teile (10, 12) aneinander mit Hilfe des Bindemittels.

2. Verfahren nach Anspruch 1, bei dem, wobei ein erster Teil (10) mindestens eine Öffnung (18, 20, 22) umfasst, die auf einer ersten (16) bzw. zweiten Fläche (17) des ersten Teils (10) mündet, die erste Fläche (16) des ersten Teils mit einem zweiten Teil (12) gemäß der Kontaktfläche (24) in Kontakt gebracht und dann ein Bindemittel (28) in der Öffnung (18, 20, 22) aufgebracht wird.

3. Verfahren nach Anspruch 2, bei dem die Öffnung (18) eine Perforation (20) oder eine Nut (22) ist.

4. Verfahren nach Anspruch 2 oder 3, bei dem einer der Teile ein Netzwerk von Öffnungen umfasst.

5. Verfahren nach Anspruch 4, bei dem ein Bindemittel in jeder Öffnung des Netzwerkes aufgebracht wird.

6. Verfahren nach einem der vorhergehenden Ansprüche, bei dem das Bindemittel (28) Kleber ist.

7. Verfahren nach Anspruch 6, bei dem der Kleber ein Polyolefin ist.

8. Verfahren nach Anspruch 7, bei dem der Kleber geschmolzenes Polypropylen ist.

9. Verfahren nach einem der Ansprüche 2 bis 8, bei dem ein Bindemittel in der Öffnung derart aufgebracht wird, dass das Bindemittel die Öffnung füllt und auf die zweite Fläche überläuft.

10. Verfahren nach einem der Ansprüche 2 bis 9, bei dem die Öffnung auf der ersten Fläche (16) gemäß einer ersten Kontur (30) und auf der zweiten Fläche (17) gemäß einer zweiten Kontur (32) mündet, wobei die erste Kontur (30) eine Fläche mit einem größeren Bereich als jener der Fläche, die durch die zweite Kontur (32) definiert ist, definiert.

11. Verfahren nach einem der Ansprüche 2 bis 10, bei dem der zweite Teil (12) einen Vorsprung (36) umfasst, der dazu bestimmt ist, mit der Öffnung (18) des ersten Teils zusammenzuwirken, und bei dem die Öffnung mit Bindemittel gefüllt wird.

12. Verfahren nach einem der Ansprüche 2 bis 11, bei dem die Tiefe der Öffnung größer als die durchschnittliche Dicke des ersten Teils ist.

13. Verfahren nach einem der vorhergehenden Ansprüche, bei dem einer (12) der Teile ein Karosserieteil eines Kraftfahrzeugs und der andere Teil (10) ein beliebiger der Teile der Gruppe ist, bestehend aus einer Verstärkung, einer Stütze für Teile, einer Stütze für Sensoren, einem Gitter, insbesondere einem Gitter eines Kühlergrills, einem Streifen und einem Dekorteil.

## Claims

1. Method of joining two thermoplastic parts (10, 12) by means of a binder material (28), **characterised in that** it comprises the following successive steps:
- bringing the parts (10, 12) into contact along a contact surface (24) delimited by a border (26),
- depositing a binder material (28) on the parts, on the outside of the border and along at least a portion of the border, so that the binder material is in contact with both parts,
- joining the two parts (10, 12) together by means of the binder material.

2. Method according to claim 1, wherein a first part (10) comprising at least one orifice (18, 20, 22) opening out respectively onto the first (16) and second (17) surfaces of the first part (10), the first surface (16) of the first part is placed in contact with a second part (12) along the contact surface (24) and then binder material (28) is deposited in the orifice (18, 20, 22).

3. Method according to claim 2, wherein the orifice (18) is a perforation (20) or groove (22).

4. Method according to claim 2 or 3, wherein one of the parts comprises an array of orifices.

5. Method according to claim 4, wherein the binder material is deposited in each orifice of the array.

6. Method according to one of the preceding claims, wherein the binder material (28) is adhesive.

7. Method according to claim 6, wherein the adhesive is a polyolefin.

8. Method according to claim 7, wherein the adhesive is molten polypropylene.

9. Method according to one of claims 2 to 8, wherein the binder material is deposited in the orifice so that the binder material fills the orifice and overflows on the second surface.

10. Method according to one of claims 2 to 9, wherein the orifice opens out onto the first surface (16) along a first contour (30) and onto the second surface (17) along a second contour (32), the first contour (30) defining an area greater than that of the surface defined by the second contour (32).

11. Method according to one of claims 2 to 10, wherein the second part (12) comprises a projection (36) intended to cooperate with the orifice (18) of the first part, and wherein the orifice is filled with binder material.

12. Method according to one of claims 2 to 11, wherein the depth of the orifice is greater than the average thickness of the first part.

13. Method according to one of the preceding claims, wherein one part (12) is a part of a motor vehicle body and the other part (10) is any one of the parts of the assembly composed by a reinforcement, a part support, a sensor support, a grille, in particular a radiator grille, a strip and a decorative part.
